# FASCICULE DE BREVET EUROPEEN

(11) **EP 1 403 993 B1**
(45) Date de publication et mention de la délivrance du brevet: **09.01.2013**
(21) Numéro de dépôt: 03292370.8
(22) Date de dépôt: 26.09.2003
(51) Int. Cl.: H02G 3/38

(54) **Profilé à positionner à l'intérieur d'une cloison, muni de moyens de solidarisation à un rail de structure**
Profilelement zum Einbau in einer Wand mit Befestigungsmitteln an einer Strukturschiene
Profiled element to be positioned into a dry wall with fastening means to a structural rail

(30) Priorité: 27.09.2002 FR 0211999
(43) Date de publication de la demande: 31.03.2004
(73) Titulaire: Legrand France, 87000 Limoges (FR); Legrand SNC, 87000 Limoges (FR)
(72) Inventeur: Buard, Yvon, 53600 Voutre (FR); Mathieu, Tristan, 21350 Gissey-le-Vieil (FR)
(74) Mandataire: Stankoff, Hélène

(56) Documents cités:
- EP-A- 1 207 605
- FR-A- 2 767 850
- US-A- 6 125 600
- US-B1- 6 388 190

## Description

La présente invention concerne d'une manière générale l'encastrement d'une installation électrique dans des cloisons de séparation ou de doublage formant une isolation thermique et/ou phonique d'une paroi, ces cloisons comprenant essentiellement des plaques de plâtre collées ou non sur une âme cartonnée et fixées sur des rails de structure verticaux et horizontaux.

Classiquement, les rails de structure horizontaux de telles cloisons sont posés alignés au sol et au plafond et reçoivent transversalement les rails de structure verticaux intermédiaires.

Plus particulièrement, l'invention concerne un profilé de cheminement de câbles, de conducteurs ou de canalisations nécessaires à la desserte d'appareillages, en particulier d'appareillages électriques, destiné à être positionné derrière une plaque d'une cloison sans participer à sa structure, ladite cloison comprenant des rails de structure sur lesquels est fixée ladite plaque, et ledit profilé comprenant des moyens de solidarisation pour être solidarisé à au moins un desdits rails de structure.

On connaît déjà des documents EP 1 207 605, EP 1 207 606 et EP 1 207 607 un profilé du type précité qui s'étend horizontalement au travers des rails de structure verticaux de la cloison considérée et qui est fixé auxdits rails de structure verticaux au moyen de connecteurs, qui s'étendent au travers de trous pratiqués dans le fond des rails de structure correspondants, ou qui sont rapportés dans des renfoncements réalisés dans les ailes latérales de ces rails de structure.

L'inconvénient principal d'un tel système de connecteur est que ce système nécessite des interventions supplémentaires pour réaliser les différents aménagements dans les rails de structure verticaux de chaque cloison destinés à accueillir les connecteurs de fixation du profilé.

Ces différentes interventions sont longues et fastidieuses et alourdissent le coût de réalisation de l'installation électrique.

Afin de remédier à cet inconvénient, l'invention propose un nouveau profilé, tel que défini en introduction, caractérisé en ce que lesdits moyens de solidarisation du profilé sont des moyens d'encliquetage prévus le long d'au moins une face externe longitudinale dudit profilé et aptes à coopérer par encliquetage avec un des rails de structure de ladite cloison de sorte que ledit profilé s'étend parallèlement audit rail de structure au moins en partie à l'extérieur de celui-ci.

Ainsi, dans un premier temps, le plaquiste, qui monte la ou les cloisons, peut facilement solidariser chaque profilé aux rails de structure des cloisons pour positionner lesdits profilés selon un schéma donné puis, dans un deuxième temps, l'électricien intervient sur les cloisons montées pour percer les profilés et introduire à l'intérieur desdits profilés les conducteurs, câbles ou canalisations nécessaires à la desserte des appareillages éventuellement rapportés dans ceux-ci.

Avantageusement, des profilés selon l'invention installés verticalement dans les angles d'une pièce ou le long des portes et fenêtres permettent avec des goulottes posées en saillie, en plinthe ou en corniche de réaliser, sans dégrader les parois, des installations discrètes, esthétiques et particulièrement évolutives.

D'autres caractéristiques non limitatives et avantageuses du profilé selon l'invention sont les suivantes :
- lesdits moyens de solidarisation sont prévus en saillie de ladite face externe longitudinale dudit profilé ;
- lesdits moyens de solidarisation sont prévus en creux sur une ou plusieurs faces externes longitudinales dudit profilé ;
- lesdits moyens de solidarisation s'étendent en continu le long de ladite face externe longitudinale du profilé ;
- lesdits moyens de solidarisation s'étendent, de façon intermittente, le long de ladite face externe longitudinale du profilé ;
- une des parois latérales longitudinales du profilé porte sur sa face externe lesdits moyens de solidarisation ;
- l'autre desdites parois latérales longitudinales du profilé porte, à l'extérieur du profilé, un rail ouvert longitudinalement dont le fond est constitué par la face externe de ladite paroi latérale longitudinale, ce rail ouvert longitudinalement étant apte à recevoir la tranche d'un panneau d'une garniture quelconque à positionner à l'intérieur de ladite cloison ou un autre profilé du même type ;
- ledit rail ouvert vient de formation avec ledit profilé ;
- lesdits moyens de solidarisation viennent de formation avec ledit profilé ;
- lesdits moyens de solidarisation dudit profilé comprennent deux languettes d'encliquetage, qui courent en parallèle le long de ladite face externe longitudinale dudit profilé, et qui sont chacune aptes à s'accrocher sous un retour d'une aile latérale longitudinale dudit rail de structure de ladite cloison, en pénétrant à l'intérieur dudit rail de structure ;
- lesdits moyens de solidarisation dudit profilé comprennent une poutre longitudinale creuse avec des parois déformables qui se raccordent chacune à ladite face externe longitudinale dudit profilé en formant une gorge longitudinale, ladite poutre longitudinale creuse étant apte à être introduite élastiquement à l'intérieur dudit rail de structure, présentant une section en U avec deux ailes latérales longitudinales portant en tête des retours dirigés l'un vers l'autre, lesdits retours desdits ailes latérales longitudinales dudit rail de structure étant destinés, lors de l'introduction de la poutre longitudinale creuse à l'intérieur dudit rail de structure, à s'engager dans lesdites gorges longitudinales dudit profilé ;
- au moins une desdites parois avant et arrière du profilé porte, sur sa face externe, au moins un moyen de repère et de positionnement d'un outil de perçage d'une ouverture d'accès à l'intérieur dudit profilé ;
- ledit moyen de repère et de positionnement est une rainure longitudinale formée dans la face externe de ladite paroi avant ou arrière considérée ;
- ladite paroi avant ou arrière considérée comporte, dans sa face externe, une pluralité de rainures longitudinales parallèles formant une pluralité de moyens de repère et de positionnement d'un outil de perçage d'une ouverture d'accès à l'intérieur dudit profilé ;
- ledit profilé comporte un socle avec un fond et deux parois latérales longitudinales parallèles, ainsi qu'au moins un couvercle de fermeture apte à fermer ledit socle ;
- chaque couvercle de fermeture est rapporté par encliquetage sur ledit socle ;
- chaque couvercle de fermeture est articulé sur ledit socle ;
- chaque couvercle de fermeture vient de formation avec ledit socle ;
- le profilé est un tube creux fermé formé d'une seule pièce ; et
- le profilé présente une pluralité de compartiments intérieurs indépendants.

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective éclatée d'un profilé selon l'invention mis en place sur un rail de structure d'une cloison ;
- la figure 2 est une vue schématique assemblée de la figure 1 ;
- la figure 3 est une vue schématique en perspective d'une variante de réalisation du profilé représenté sur la figure 1 ;
- la figure 4 est une vue schématique en perspective d'une autre variante de réalisation du profilé selon l'invention ;
- la figure 5 est une vue schématique partielle en perspective d'une autre variante de réalisation du profilé selon l'invention ;
- la figure 6 est une vue de détail d'une variante de réalisation du profilé de la figure 5 ;
- les figures 7A et 7B sont des vues schématiques en perspective d'un accessoire de repérage pour le profilé de cheminement de câbles selon l'invention.

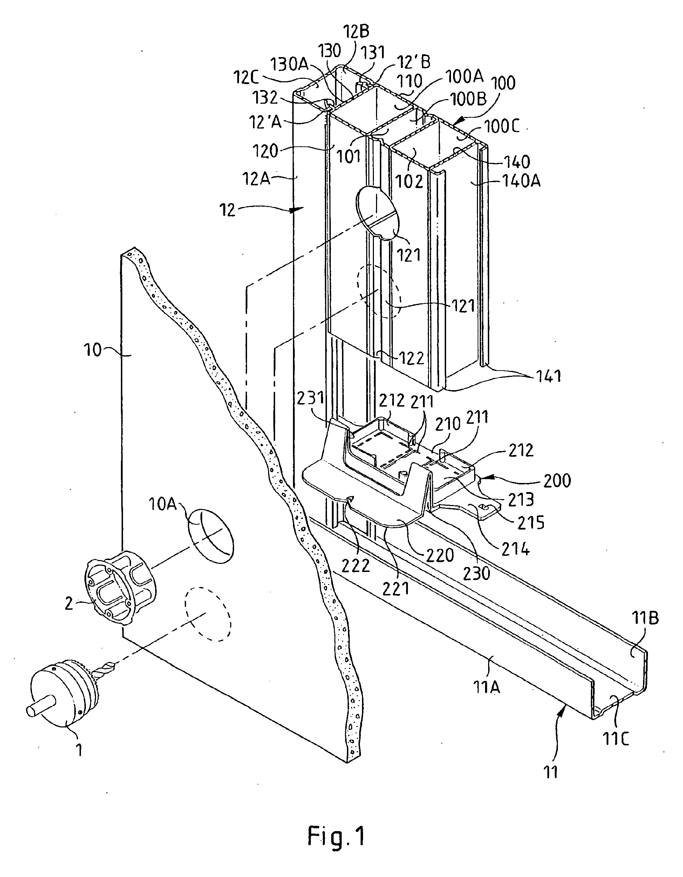

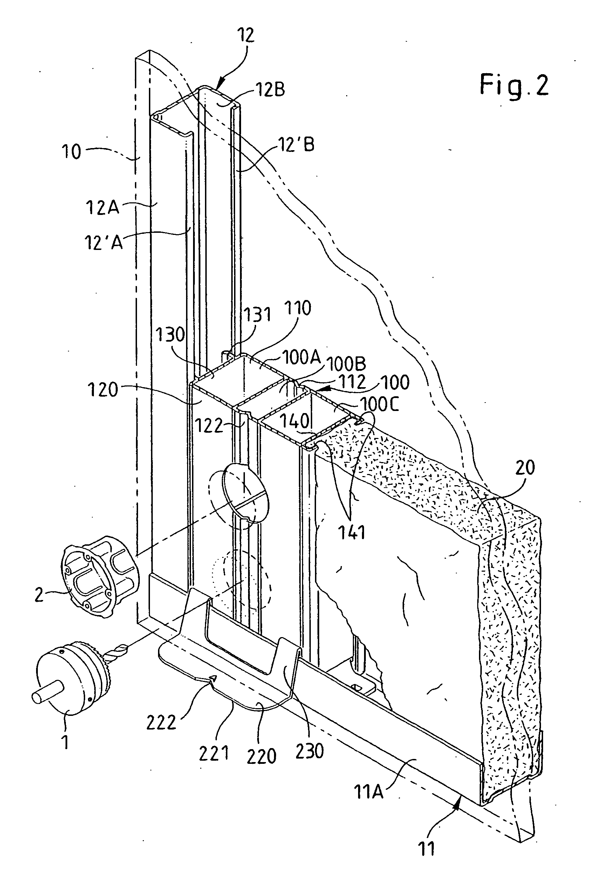

Sur les figures 1 et 2, on a représenté, partiellement, une cloison de séparation qui comporte une plaque avant 10 fixée sur des rails de structure verticaux 12 et horizontaux 11.

Cette cloison peut comporter deux plaques avant et arrière parallèles (la plaque arrière étant non représentée) fixées sur les rails de structure horizontaux 11 et verticaux 12.

Les rails de structure 11, 12 sont ici des profilés métalliques présentant une section transversale en U avec un fond 11 C, 12C à partir duquel s'élèvent des ailes latérales longitudinales, 11A, 11B, 12A, 12B parallèles.

Le rail de structure vertical 12 présente, au sommet de ses ailes latérales longitudinales 12A, 12B, des retours 12'A, 12'B dirigés l'un vers l'autre et bordant l'ouverture longitudinale dudit rail. Le rail de structure vertical 12 présente une extrémité engagée dans le rail de structure horizontal 11 pour rigidifier la structure porteuse des plaques de la cloison.

Un profilé 100 de cheminement de câbles ou de conducteurs nécessaires à la desserte d'appareillages électriques éventuellement positionnés à l'intérieur de celui-ci est positionné derrière la plaque avant 10 de la cloison.

Selon un premier mode de réalisation du profilé 100 représenté sur les figures 1, 2 et 3, il est constitué d'un tube creux fermé formé d'une seule pièce avec deux parois latérales longitudinales 130, 140 parallèles et deux parois avant 120 et arrière 110 parallèles. Le profilé 100 présente ici une section transversale rectangulaire.

Intérieurement, il comporte plusieurs compartiments 100A, 100B, 100C délimités par des cloisons longitudinales 101, 102 parallèles.

Ici, les deux compartiments 100A, 100C d'extrémité sont de même taille et sont séparés par un compartiment 100B central de plus petite taille.

Avantageusement, l'installateur peut faire courir, dans les différents compartiments 100A, 100B, 100C du profilé 100, différents types de câbles, comme par exemple des câbles de courant fort et des câbles de courant faible de sorte que ceux-ci sont séparés les uns des autres par type.

Le profilé 100 comprend des moyens de solidarisation 131, 132 pour être solidarisé à au moins un desdits rails de structure.

Selon l'exemple représenté, le profilé 100 est solidarisé au rail de structure vertical 12 de sorte que sa paroi avant 120 est placée derrière la plaque avant 10 de la cloison, parallèlement à celle-ci.

Avantageusement, selon l'invention, les moyens de solidarisation 131, 132 du profilé 100 sont des moyens d'encliquetage prévus le long d'une face externe longitudinale 130A dudit profilé 100 et aptes à coopérer par encliquetage avec le rail de structure vertical 12 de la cloison de sorte que le profilé 100 s'étend parallèlement à ce rail de structure vertical 12 principalement à l'extérieur de celui-ci.

Bien entendu, avec lesdits moyens de solidarisation, on pourrait prévoir également de solidariser le profilé 100 à un rail de structure horizontal.

Selon l'exemple représenté, le profilé 100 étant positionné verticalement, il présente une extrémité qui s'engage dans le rail de structure horizontal 11 qui peut être positionné sur le sol.

Comme le montrent les figures 1, 2 et 3, les moyens de solidarisation 131, 132 sont prévus en saillie de la face externe longitudinale 130A du profilé 100.

Bien entendu, selon une variante non représentée, on peut prévoir que ces moyens de solidarisation soient prévus en creux sur une ou plusieurs faces externes longitudinales dudit profilé.

Ici, les moyens de solidarisation 131, 132 s'étendent en continu le long de ladite face externe longitudinale 130A du profilé 100. lls sont prévus sur la face externe longitudinale 130A d'une des parois latérales longitudinales 130 du profilé.

Selon l'exemple représenté sur les figures 1 et 2, ces moyens de solidarisation 131, 132 sont constitués de deux languettes d'encliquetage, qui courent en continu en parallèle le long de ladite face externe longitudinale 130A de la paroi latérale longitudinale 130 correspondante du profilé 100, et qui comprennent chacune, à leur extrémité, des dents aptes à s'accrocher sous les retours 12'A, 12'B des ailes latérales longitudinales 12A, 12B du rail de structure vertical 12 de la cloison, en pénétrant à l'intérieur de ce dernier.

Le profilé 100 est réalisé par moulage ou par extrusion d'une matière plastique et les languettes d'encliquetage 131, 132, prévues en saillie de la face externe longitudinale 130A de sa paroi latérale longitudinale 130, viennent de formation avec ledit profilé 100.

Selon une caractéristique avantageuse du profilé 100 représenté sur les figures 1 et 2, l'autre paroi latérale longitudinale 140 du profilé 100 forme, à l'extérieur de celui-ci, un rail ouvert longitudinal dont le fond est constitué par la face externe longitudinale 140A de ladite paroi latérale longitudinale 140 du profilé 100. Ce rail ouvert longitudinalement est apte à recevoir la tranche d'un panneau 20 d'une garniture quelconque, ici une garniture d'isolation, à positionner à l'intérieur de ladite cloison ou un autre profilé du même type que le profilé 100 pour constituer par exemple un profilé dont les deux parois latérales longitudinales portent des moyens d'encliquetage sur des rails de structure.

En particulier, le rail ouvert longitudinalement est délimité par deux ailes latérales longitudinales 141 parallèles dont les retours viennent en prise avec le panneau de garniture 20.

Ainsi, avantageusement, le profilé 100 est solidarisé, d'un côté, par encliquetage au rail de structure vertical 12 de la cloison et, d'un autre côté, par engagement sur le panneau de garniture 20 engagé dans le rail de structure horizontal 11 de ladite cloison.

Le profilé 100 comporte, sur la face externe de ses parois avant 120 et arrière 110, un moyen de repère et de positionnement 122, 112 du foret d'un outil de perçage 1, ici une scie cloche, pour permettre de réaliser facilement une ouverture d'accès 121 à l'intérieur dudit profilé.

Ici, l'ouverture d'accès 121 réalisée au moyen de l'outil de perçage 1 permet d'accueillir un boîtier 2 de montage d'un appareillage électrique.

Ce moyen de repère et de positionnement est une rainure longitudinale 122, 112 en V formée dans la face externe de chaque paroi avant 120 et arrière 110 considérée.

Comme le montre la figure 1, l'ouverture d'accès 121 du profilé 100 est réalisée après que la cloison soit montée. L'installateur perce tout d'abord la plaque avant 10 de la cloison avec la scie cloche 1 et réalise une ouverture 10A pour atteindre la paroi avant 120 du profilé 100. Pour cela, il a besoin de repérer le profilé 100 à l'intérieur de la cloison. Ce repérage est réalisé à l'aide d'un accessoire de repérage 200.

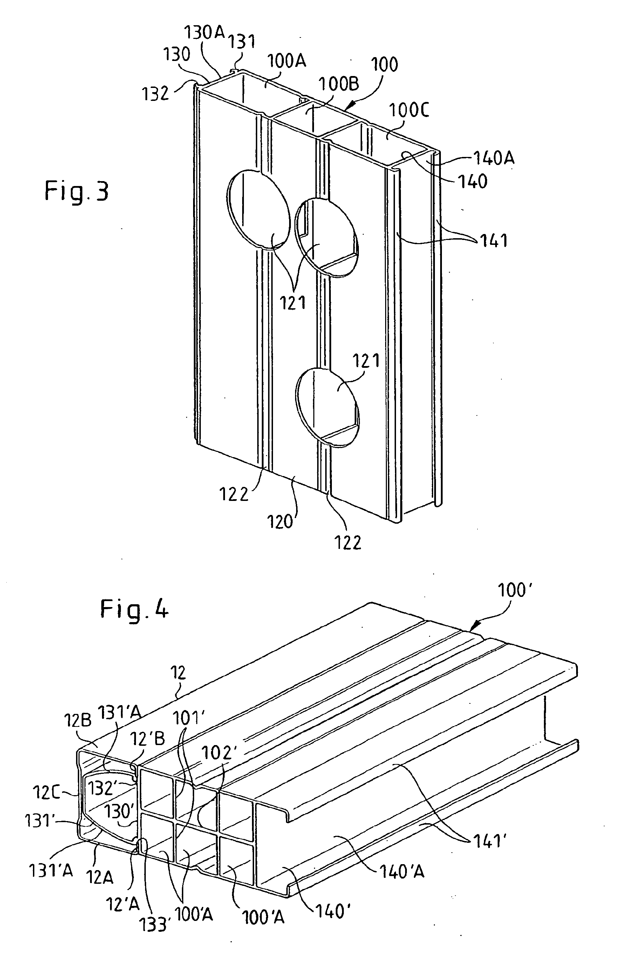

Comme le montre plus particulièrement la figure 3, selon une variante de réalisation, le profilé 100 peut présenter une plus grande largeur, et, dans ce cas, ses parois avant 120 et arrière 110 comportent une pluralité de rainures longitudinales 122 parallèles, de profil en V, formant une pluralité de moyens de repère et de positionnement d'un foret d'un outil de perçage pour réaliser, à différents endroits du profilé, des ouvertures d'accès 121 aux différents compartiments intérieurs 100A, 100B, 100C de celui-ci.

Sur les figures 4, 5 et 6, on a représenté d'autres variantes de réalisation du profilé selon l'invention.

Sur la figure 4, le profilé 100' est également un tube creux fermé compartimenté intérieurement par des cloisons 101', 102' en différents compartiments 100'A et présentant, sur la face externe longitudinale d'une de ses parois latérales longitudinales 130', des moyens de solidarisation à un rail de structure 12 d'une cloison.

lci, les moyens de solidarisation comprennent une poutre longitudinale creuse 131' avec des parois 131'A déformables qui se raccordent chacune à ladite face externe longitudinale 130'A du profilé 100' en formant une gorge longitudinale 132', 133'.

La poutre longitudinale creuse 131' formant les moyens de solidarisation est apte à être introduite élastiquement à l'intérieur du rail de structure 12 par son ouverture longitudinale.

Lors de l'introduction de la poutre longitudinale creuse 131' à l'intérieur du rail de structure 12, les retours 12'A, 12'B, dirigés l'un vers l'autre et prévus à l'extrémité des ailes latérales longitudinales 12A, 12B dudit rail, s'engagent dans lesdites gorges longitudinales 132', 133' du profilé 100' pour que ce profilé 100' soit solidarisé au rail de structure 12.

L'autre paroi latérale longitudinale 140' du profilé 100' forme également, du côté extérieur, un rail ouvert dont le fond est constitué par la face externe longitudinale 140'A de ladite paroi latérale longitudinale 140'.

Ce rail ouvert est délimité latéralement par des parois latérales longitudinales 141' qui portent, sur leur bord libre, un retour.

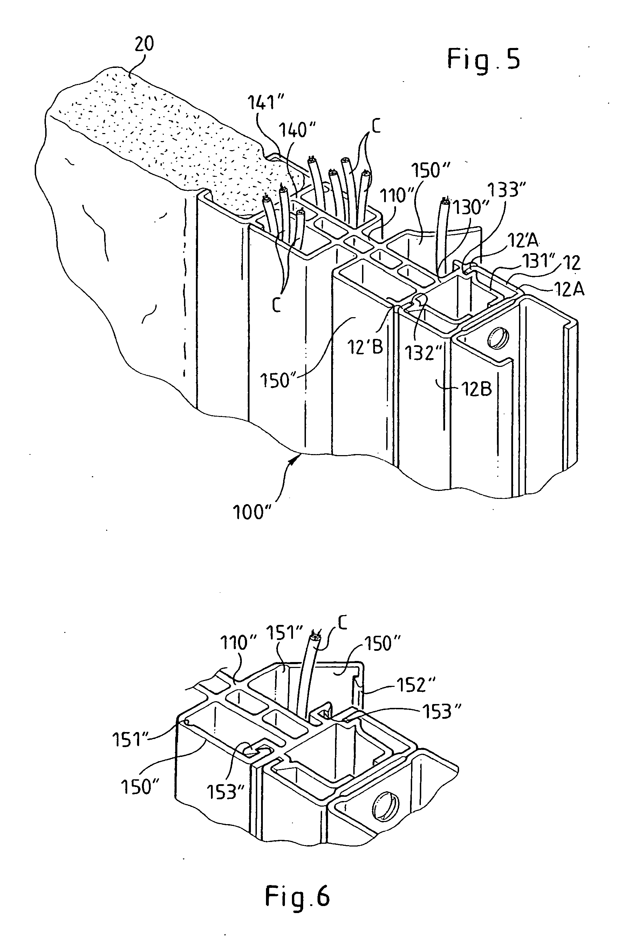

Sur les figures 5 et 6, on a représenté un profilé 100" ouvert, dont la face avant 150" est un couvercle de fermeture d'un socle comprenant un fond et des parois latérales longitudinales.

Ce couvercle de fermeture 150" peut être monté par encliquetage sur les parois latérales longitudinales du socle ou venir de formation avec ledit socle en constituant une paroi souple. Ce couvercle de fermeture 150" peut également être rigide en étant monté à pivotement sur une paroi latérale longitudinale du socle par l'intermédiaire d'une charnière 151" venue de formation avec le socle ou rapportée sur celui-ci.

Dans ce cas, comme le montre la figure 6, le couvercle de fermeture 150" est avantageusement destiné à venir se verrouiller sur le socle au moyen d'une coopération de dents d'encliquetage 152", 153".

Le profilé 100" comporte globalement plusieurs socles formant différents compartiments reliés à une structure centrale 110". Il présente, tout comme les profilés 100 et 100', deux parois latérales longitudinales 130" et 140" d'extrémité, l'une des parois latérales longitudinales comportant, sur sa face externe, des moyens de solidarisation 131" à un rail de structure vertical 12 d'une cloison à l'intérieur duquel le profilé 100" est positionné, et l'autre paroi latérale longitudinale 140" formant sur sa face externe un rail 141" destiné à accueillir un panneau 20 d'une garniture à positionner à l'intérieur de la cloison.

Les différents compartiments du profilé 100" peuvent accueillir différents types de câbles ou de conducteurs C, par exemple des câbles ou des conducteurs de courant fort et de courant faible.

Selon les exemples représentés sur les figures 5 et 6, les moyens de solidarisation 131" comprennent également une poutre à parois déformables raccordées à la face externe de la paroi latérale longitudinale 130" correspondante du profilé en formant des gorges longitudinales parallèles 132", 133" dans lesquelles sont destinés à s'engager des retours 12'A, 12'B des ailes latérales longitudinales du rail de structure vertical 12 lors de l'insertion de la poutre à l'intérieur de ce dernier.

Les profilés 100' et 100" sont également avantageusement réalisés d'une seule pièce en matière plastique moulée ou extrudée.

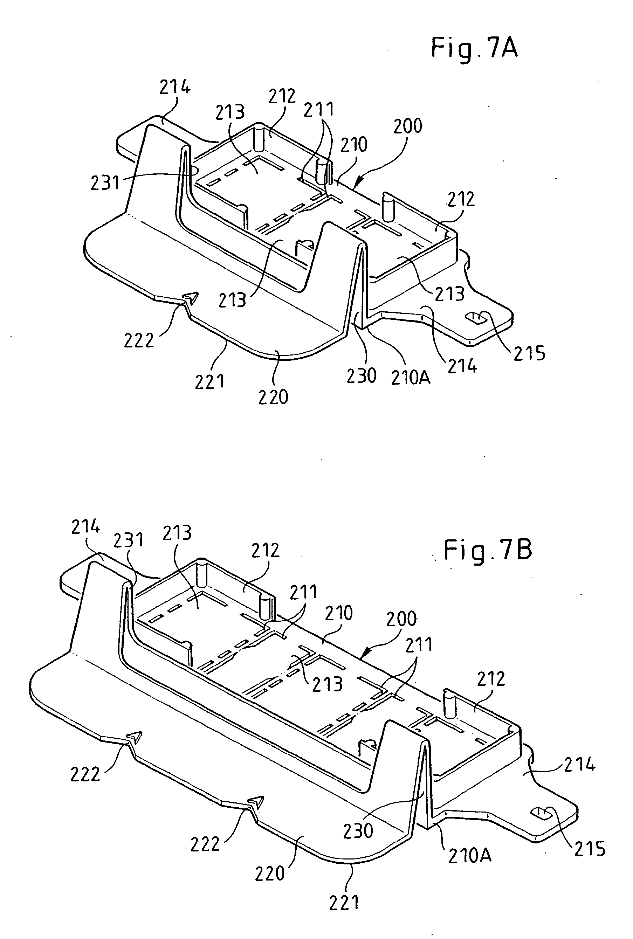

Sur les figures 7A et 7B, on a représenté un accessoire de repérage 200 pour un des profilés 100, 100', 100" de cheminement de câbles, de conducteurs ou de canalisations représentés sur les figures 1 à 6.

Sur les figures 1 et 2, l'accessoire de repérage 200 représenté sur la figure 7A est placé en position prêt à recevoir l'extrémité du profilé 100.

L'accessoire de repérage 200 de la figure 7B est spécialement adapté au profilé 100 représenté sur la figure 3.

L'accessoire de repérage 200 représenté sur les figures 7A et 7B comprend un piétement apte à recevoir une extrémité dudit profilé 100, ce piétement portant ici sur un côté une semelle 220 destinée à se placer à l'extérieur dudit profilé 100 et à dépasser de la plaque avant 10 de la cloison fixée sur les rails de structure 11, 12 pour former un moyen de repérage de l'emplacement dudit profilé 100 courant dans ladite cloison (voir figure 2).

Ici, comme le montrent plus particulièrement les figures 1 et 2, le piétement de l'accessoire de repérage 200 est agencé de manière à se positionner à l'intérieur du rail de structure considéré, ici le rail de structure horizontal 11, la semelle 220 portée par le piétement se plaçant à l'extérieur dudit rail de structure 11.

Le piétement comporte une embase 210 sensiblement plane de forme rectangulaire qui porte, sur un de ses grands côtés, ladite semelle 220.

Cette embase 210 présente une largeur légèrement inférieure à la largeur interne du rail de structure 11 accueillant l'accessoire, de façon à ce que l'accessoire de repérage 200 soit calé dans le rail.

Cette embase 210 porte des parois 212, qui s'élèvent perpendiculairement à ladite embase, et qui s'étendent sur une partie de son contour pour définir intérieurement un logement dont le fond est constitué par une partie de cette embase 210.

A ce propos, le fond du logement défini à l'intérieur des parois 212 comprend des lignes de prédécoupe 211 délimitant des ouvertures 213 à pratiquer par un installateur dans ladite embase. Ces ouvertures 213 peuvent permettre d'introduire dans le profilé, via son extrémité reçue par l'accessoire de repérage 200, des conducteurs provenant par exemple d'un faux plafond, d'un plancher technique ou d'un autre profilé positionné à l'intérieur ou à l'extérieur de la cloison.

Avantageusement, le fond du logement apporte une isolation des câbles contenus dans le profilé vis-à-vis du rail, et cette isolation est conservée lors de l'utilisation des ouvertures 213, en réalisant en correspondance des ouvertures de dimensions supérieures dans le rail.

Ici, le piétement est agencé de manière à pénétrer partiellement à l'intérieur du profilé 100.

Plus particulièrement, ce sont les parois 212, qui s'élèvent perpendiculairement à l'embase 210, qui s'engagent dans le profilé 100.

Les parois 212 introduites à l'intérieur du profilé 100 servent de butée de positionnement de l'accessoire de repérage 200 dans le profilé 100 et permettent de réaliser une certaine solidarisation de l'accessoire de repérage 200 au profilé 100.

Bien entendu, selon un autre mode de réalisation non représenté, on pourrait prévoir que le piétement de l'accessoire de repérage soit agencé de manière à entourer par l'extérieur ledit profilé. Cela serait possible par exemple en prévoyant de positionner les parois 212 portées par l'embase 210, de telle manière que celles-ci se placent à l'extérieur du profilé plutôt qu'à l'intérieur de celui-ci, comme cela est prévu sur les figures.

La semelle 220 s'étend sensiblement dans le plan de l'embase 210, à partir d'un bord d'extrémité libre d'une paroi 230, qui s'élève perpendiculairement à ladite embase 210, et qui est repliée pour former un coude destiné à se placer à cheval sur une aile latérale longitudinale 11A du rail de structure 11 considéré (voir figure 2).

De cette manière, l'accessoire de repérage 200 est solidarisé au rail de structure 11 dans lequel il est introduit et, du fait de la largeur de l'embase 210 qui est à peu près égale à la largeur interne du rail de structure 11, l'accessoire de repérage 200 est calé dans ledit rail.

Ladite paroi 230 formant le coude est placée sur un bord longitudinal 210A de l'embase 210 et comporte ici, avantageusement, une échancrure 231 lui conférant une certaine élasticité.

Par ailleurs, le piétement comporte, sur au moins un petit côté de l'embase 210, une oreille de préhension 214, qui s'étend dans le plan de l'embase 210, et qui est percée d'un trou 215 apte à être traversé par un organe d'ancrage (non représenté) pour la fixation dudit piétement audit rail de structure 11.

lci, selon les exemples de réalisation représentés, le piétement comporte, sur chacun des deux petits côtés de ladite embase 210, une oreille de préhension 214 percée d'un trou 215 apte à être traversé par un organe d'ancrage pour la fixation dudit piétement audit rail de structure.

En outre, comme le montrent les figures 1, 2, 7A et 7B, avantageusement, la semelle 220 comporte, dans son bord libre longitudinal 221, au moins une échancrure 222 qui se place à l'aplomb de la rainure longitudinale 122 en forme de V pratiquée dans la paroi avant 120 du profilé 100 lorsque ledit profilé est positionné sur le piétement de l'accessoire de repérage 200. Cette échancrure 222 permet ainsi d'indiquer à l'installateur, depuis l'extérieur de la cloison, où se trouve ladite rainure longitudinale en forme de V réalisée dans le profilé 100 et servant de moyens de repère et de positionnement d'un foret d'un outil de perçage du profilé. En d'autres termes, chaque échancrure 222 de la semelle 220 indique à l'installateur une ligne de perçage du profilé considéré.

Lorsque l'accessoire de repérage 200 présente une petite longueur comme celle représentée sur la figure 7A, la semelle 220 comporte, dans son bord libre longitudinal 221, une seule échancrure 222 destinée à se positionner à l'aplomb de la rainure longitudinale 122 en forme de V pratiquée dans la paroi avant 120 du profilé 100.

Par contre, lorsque l'accessoire de repérage 200 est destiné à recevoir un profilé de plus grande largeur, comme celui représenté sur la figure 3, qui comporte, dans sa paroi avant, deux rainures longitudinales 122 en forme de V parallèles, la semelle 220 de cet accessoire de repérage 200 comporte, dans son bord libre longitudinal 221, deux échancrures 222 destinées à se positionner chacune à l'aplomb d'une des rainures longitudinales 122 pratiquées dans la face externe de la paroi avant 120 du profilé 100 considéré.

L'accessoire de repérage 200 représenté sur les figures 7A et 7B est formé, avantageusement, d'une seule pièce par moulage d'une matière plastique. Il est avantageux que cette matière plastique soit colorée d'une couleur vive pour que la partie de la semelle 220, qui dépasse de la cloison une fois que l'ensemble est installé (voir figure 2), saute à l'oeil de l'installateur qui cherche à retrouver les profilés positionnés derrière la plaque avant 10 de la cloison montée.

Ainsi, le plaquiste peut facilement encliqueter des profilés 100, tels que représentés sur la figure 1, sur les rails de structure 12 considérés selon un plan donné et positionner en pied de chaque profilé un accessoire de repérage 200, comme représenté sur la figure 1, avant de monter la plaque avant 10 de la cloison.

Puis, l'installateur-électricien peut, à l'aide de chaque semelle 220 débordante de la plaque avant 10 de la cloison, facilement repérer chaque profilé 100 positionné dans la cloison pour le percer et y introduire les conducteurs, les câbles et éventuellement les appareillages électriques prévus.

Lorsque l'installation électrique est terminée, l'installateur n'a plus qu'à couper la semelle à ras de la cloison ou à laisser la semelle 220 telle que, celle-ci étant recouverte ultérieurement par la plinthe ou par le revêtement de sol.

En particulier, en ce qui concerne l'accessoire de repérage, on pourra prévoir que le piétement de cet accessoire porte, sur chacun de ses côtés longitudinaux parallèles, une semelle destinée à se placer à l'extérieur du profilé et à dépasser des plaques avant et arrière fixées sur les rails de structure d'une cloison de séparation.

Dans ce cas, les semelles peuvent être identiques et peuvent comporter chacune, dans leur bord libre longitudinal, des échancrures indiquant une ligne de perçage du profilé correspondant.

Chaque semelle est bien entendu rattachée à l'embase du piétement constituant l'accessoire de repérage par une paroi prévue sur un bord longitudinal de l'embase, qui s'élève perpendiculairement à cette dernière, et qui est repliée pour former un coude tout comme la paroi 230 représentée sur les figures 7A et 7B.

## Revendications

1. Profilé (100) de cheminement de câbles, de conducteurs ou de canalisations nécessaires à la desserte d'appareillages, en particulier d'appareillages électriques, destiné à être positionné derrière une plaque (10) d'une cloison sans participer à sa structure, ladite cloison comprenant des rails de structure (11, 12) sur lesquels est fixée ladite plaque (10), et ledit profilé (100) comprenant des moyens de solidarisation (131, 132) pour être solidarisé à au moins un desdits rails de structure (12), **caractérisé en ce que** lesdits moyens de solidarisation (131, 132) du profilé sont des moyens d'encliquetage prévus le long d'au moins une face externe longitudinale (130A) dudit profilé (100) et aptes à coopérer par encliquetage avec un des rails (12) de ladite cloison de sorte que ledit profilé (100) s'étend parallèlement audit rail (12) au moins en partie à l'extérieur de celui-ci.

2. Profilé (100) selon la revendication 1, **caractérisé en ce que** lesdits moyens de solidarisation (131, 132) sont prévus en saillie de ladite face externe longitudinale dudit profilé (100).

3. Profilé selon la revendication 1, **caractérisé en ce que** lesdits moyens de solidarisation sont prévus en creux sur une ou plusieurs faces externes longitudinales dudit profilé.

4. Profilé (100) selon l'une des revendications 1 à 3, **caractérisé en ce que** lesdits moyens de solidarisation (131, 132) s'étendent en continu le long de ladite face externe longitudinale du profilé (100).

5. Profilé selon l'une des revendications 1 à 3, **caractérisé en ce que** lesdits moyens de solidarisation s'étendent de façon intermittente le long de ladite face externe longitudinale du profilé.

6. Profilé (100) selon l'une des revendications 1 à 5, comportant deux parois latérales longitudinales (130, 140) parallèles, **caractérisé en ce qu'**une desdites parois latérales longitudinales (130) porte, sur sa face externe (130A), lesdits moyens de solidarisation (131, 132).

7. Profilé (100) selon la revendication 6, **caractérisé en ce que** l'autre desdites parois latérales longitudinales (140) porte, à l'extérieur du profilé, un rail ouvert longitudinalement dont le fond est constitué par la face externe (140A) de ladite paroi latérale longitudinale (140), ce rail ouvert longitudinalement étant apte à recevoir la tranche d'un panneau (20) d'une garniture quelconque à positionner à l'intérieur de ladite cloison ou un autre profilé du même type.

8. Profilé (100) selon la revendication 7, **caractérisé en ce que** ledit rail ouvert vient de formation avec ledit profilé (100).

9. Profilé (100) selon l'une des revendications 1 à 8, **caractérisé en ce que** lesdits moyens de solidarisation (131, 132) viennent de formation avec ledit profilé (100).

10. Profilé (100) selon l'une des revendications 1 à 9, **caractérisé en ce que** lesdits moyens de solidarisation dudit profilé comprennent deux languettes d'encliquetage (131, 132), qui courent en parallèle le long de ladite face externe longitudinale (130A) dudit profilé, et qui sont chacune aptes à s'accrocher sous un retour (12'A, 12'B) d'une aile latérale longitudinale (12A, 12B) dudit rail de structure (12) de ladite cloison, en pénétrant à l'intérieur dudit rail de structure.

11. Profilé (100') selon les revendications 1 à 9, **caractérisé en ce que** lesdits moyens de solidarisation dudit profilé comprennent une poutre longitudinale creuse (131') avec des parois (131'A) déformables qui se raccordent chacune à ladite face externe longitudinale dudit profilé (100') en formant une gorge longitudinale (132', 133'), ladite poutre longitudinale creuse (131') étant apte à être introduite élastiquement à l'intérieur dudit rail de structure (12), présentant une section en U avec deux ailes latérales longitudinales (12A, 12B) portant en tête des retours (12'A, 12'B) dirigés l'un vers l'autre, lesdits retours (12'A, 12'B) desdits ailes latérales longitudinales (12A, 12B) dudit rail de structure (12) étant destinés, lors de l'introduction de la poutre longitudinale creuse (131') à l'intérieur dudit rail de structure, à s'engager dans lesdites gorges longitudinales (132', 133') dudit profilé (100').

12. Profilé (100) selon l'une des revendications 1 à 11, présentant des parois avant (120) et arrière (110) longitudinales parallèles, **caractérisé en ce qu'**au moins une desdites parois avant (120) et arrière (110) porte, sur sa face externe, au moins un moyen de repère et de positionnement (122) d'un outil de perçage (1) d'une ouverture d'accès (12) à l'intérieur dudit profilé.

13. Profilé (100) selon la revendication 12, caractérisé en que ledit moyen de repère et de positionnement (122) est une rainure longitudinale formée dans la face externe de ladite paroi avant (120) ou arrière (110) considérée.

14. Profilé (100) selon la revendication 13, **caractérisé en ce que** ladite paroi avant (120) ou arrière (110) considérée comporte, dans sa face externe, une pluralité de rainures longitudinales (122) parallèles formant une pluralité de moyens de repère et de positionnement d'un outil de perçage (1) d'une ouverture d'accès (121) à l'intérieur dudit profilé.

15. Profilé (100") selon l'une quelconques des revendications précédentes, **caractérisé en ce que** ledit profilé comporte un socle avec un fond et deux parois latérales longitudinales parallèles, ainsi qu'au moins un couvercle de fermeture apte à fermer ledit socle.

16. Profilé selon la revendication 15, **caractérisé en ce que** chaque couvercle de fermeture est rapporté par encliquetage sur ledit socle.

17. Profilé (100") selon la revendication 15, **caractérisé en ce que** chaque couvercle de fermeture est articulé sur ledit socle.

18. Profilé (100") selon la revendication 17, **caractérisé en ce que** chaque couvercle de fermeture vient de formation avec ledit socle.

19. Profilé (100) selon l'une quelconque des revendications précédentes, **caractérisé en ce qu'**il est un tube creux fermé formé d'une seule pièce.

20. Profilé (100) selon l'une des revendications 15 à 19, **caractérisé en ce qu'**il présente une pluralité de compartiments (100A, 100B, 100C) intérieurs indépendants.

## Claims

1. Profile (100) for routing cables, conductors or lines which are required to service equipment, in particular electrical equipment, which section is intended to be positioned behind a board (10) of a partition without being part of the structure thereof, said partition comprising structural rails (11, 12) to which said board (10) is fixed, and said section (100) comprising joining means (131, 132) for joining at least one of said structural rails (12), **characterised in that** said joining means (131, 132) of the section are snap-engagement means provided along at least one longitudinal external surface (130A) of said section (100) and able to cooperate by means of snap engagement with one of the rails (12) of said partition in such a way that said section (100) extends parallel to said rail (12), outside thereof at least in part.

2. Profile (100) according to claim 1, **characterised in that** said joining means (131, 132) are provided so as to project from said longitudinal external surface of said section (100).

3. Profile according to claim 1, **characterised in that** said joining means are provided so as to be recessed on one or more longitudinal external surfaces of said section.

4. Profile (100) according to any of claims 1 to 3, **characterised in that** said joining means (131, 132) extend continuously along said longitudinal external surface of the section (100).

5. Profile according to any of claims 1 to 3, **characterised in that** said joining means extend in an intermittent manner along said longitudinal external surface of the section.

6. Profile (100) according to any of claims 1 to 5, comprising two parallel longitudinal lateral walls (130, 140), **characterised in that** one of said longitudinal lateral walls (130) bears, on the external surface (130A) thereof, said joining means (131, 132).

7. Profile (100) according to claim 6, **characterised in that** the other of said longitudinal lateral walls (140) bears, outside of the section, a longitudinally open rail, the back of which is formed by the external surface (140A) of said longitudinal lateral wall (140), this longitudinally open rail being able to receive the edge of a panel (20) of any lining to be positioned inside said partition or another section of the same type.

8. Profile (100) according to claim 7, **characterised in that** said open rail is formed integrally with said section (100).

9. Profile (100) according to any of claims 1 to 8, **characterised in that** said joining means (131, 132) are formed integrally with said section (100).

10. Profile (100) according to any of claims 1 to 9, **characterised in that** said joining means of said section comprise two snap engagement tongues (131, 132), which extend in parallel along said longitudinal external surface (130A) of said profile, and which are each able to catch under a return (12'A, 12'B) of a longitudinal lateral flange (12A, 12B) of said structural rail (12) of said partition by penetrating the inside of said structural rail.

11. Profile (100') according to any of claims 1 to 9, **characterised in that** said joining means of said section comprise a hollow longitudinal beam (131') having deformable walls (131'A) which each connect to said longitudinal external surface of said section (100') to form a longitudinal groove (132', 133'), said hollow longitudinal beam (131') being able to be resiliently introduced inside said structural rail (12), having a U-section comprising two longitudinal lateral flanges (12A, 12B) bearing returns (12'A, 12'B) at the top which are directed towards each other, said returns (12'A, 12'B) of said longitudinal lateral flanges (12A, 12B) of said structural rail (12) being intended, when the hollow longitudinal beam (131') is introduced inside said structural rail, to engage in said longitudinal grooves (132', 133') of said section (100').

12. Profile (100) according to any of claims 1 to 11, having parallel longitudinal front (120) and rear (110) walls, **characterised in that** at least one of said front (120) and rear (110) walls bears, on the external surface thereof, at least one means for marking and positioning (122) a tool (1) for drilling an access opening (12) to the inside of said section.

13. Profile (100) according to claim 12, **characterised in that** said marking and positioning means (122) is a longitudinal channel formed in the external surface of said front wall (120) or rear wall (110) in question.

14. Profile (100) according to claim 13, **characterised in that** said front wall (120) or rear wall (110) in question comprises, in the external surface thereof, a plurality of parallel longitudinal channels (122) forming a plurality of means for marking and positioning a tool (1) for drilling an access opening (121) inside said profile.

15. Profile (100") according to any of the preceding claims, **characterised in that** said section comprises a column having a base and two parallel longitudinal lateral walls, and at least a closure cover able to close said column.

16. Profile according to claim 15, **characterised in that** each closure cover is connected to said column by means of snap engagement.

17. Profile (100") according to claim 15, **characterised in that** each closure cover is articulated to said column.

18. Profile (100") according to claim 17, **characterised in that** each closure cover is formed integrally with said column.

19. Profile (100) according to any of the preceding claims, **characterised in that** it is a closed hollow tube formed in one piece.

20. Profile (100) according to any of claims 15 to 19, **characterised in that** it has a plurality of independent internal compartments (100A, 100B, 100C).

## Patentansprüche

1. Profil (100) zum Führen von Kabeln, Leitern oder Stromschienen, die zur Versorgung von I nstallationsgeräten, insbesondere elektrischen Installationsgeräten erforderlich sind, das dazu bestimmt ist, hinter einer Platte (10) einer Wand angeordnet zu sein, ohne Teil deren Struktur zu sein, wobei die Wand Tragschienen (11, 12) umfasst, auf denen die Platte (10) befestigt ist, und wobei das Profil (100) Befestigungsmittel (131, 132) aufweist, um an wenigstens einer Tragschiene (12) befestigt zu werden,
**dadurch gekennzeichnet, dass** die Befestigungsmittel (131, 132) des Profils Rastmittel sind, die entlang wenigstens einer Längsaußenseite (130A) des Profils (100) vorgesehen sind und durch Verrasten mit einer der Schienen (12) der Wand solchermaßen zusammenzuwirken vermögen, dass das Profil (100) parallel zur Schiene (12) wenigstens teilweise an deren Außenseite verläuft.

2. Profil (100) nach Anspruch 1,
**dadurch gekennzeichnet, dass** die Befestigungsmittel (131, 132) an der Längsaußenseite des Profils (100) vorspringend vorgesehen sind.

3. Profil nach Anspruch 1,
**dadurch gekennzeichnet, dass** die Befestigungsmittel auf einer oder mehreren Längsaußenseiten des Profils vertieft vorgesehen sind.

4. Profil (100) nach einem der Ansprüche 1 bis 3,
**dadurch gekennzeichnet, dass** sich die Befestigungsmittel (131, 132) kontinuierlich entlang der Längsaußenseite des Profils (100) erstrecken.

5. Profil nach einem der Ansprüche 1 bis 3,
**dadurch gekennzeichnet, dass** sich die Befestigungsmittel diskontinuierlich entlang der Längsaußenseite des Profils erstrecken.

6. Profil (100) nach einem der Ansprüche 1 bis 5, mit zwei parallelen Seitenlängswänden (130, 140),
**dadurch gekennzeichnet, dass** eine der Seitenlängswände (130) an ihrer Außenseite (130A) die Befestigungsmittel (131, 132) trägt.

7. Profil (100) nach Anspruch 6,
**dadurch gekennzeichnet, dass** die andere Seitenlängswand (140) an der Außenseite des Profils eine in Längsrichtung offene Schiene trägt, deren Boden durch die Außenseite (140A) der Seitenlängswand (140) gebildet ist, wobei die in Längsrichtung offene Schiene die Schmalseite einer Platte (20) einer beliebigen innen in der Wand anzuordnenden Ausrüstung oder ein anderes Profil vom gleichen Typ aufzunehmen vermag.

8. Profil (100) nach Anspruch 7,
**dadurch gekennzeichnet, dass** die offene Schiene mit dem Profil (100) angeformt ist.

9. Profil (100) nach einem der Ansprüche 1 bis 8,
**dadurch gekennzeichnet, dass** die Befestigungsmittel (131, 132) mit dem Profil (100) angeformt sind.

10. Profil (100) nach einem der Ansprüche 1 bis 9,
**dadurch gekennzeichnet, dass** die Befestigungsmittel des Profils zwei Rastzungen (131, 132) aufweisen, die sich parallel zueinander entlang der Längsaußenseite (130A) des Profils erstrecken und sich jeweils unter eine Umbiegung (12'A, 12'B) eines Seitenlängsschenkels (12A, 12B) der Tragschiene (12) der Wand einzuhaken vermögen, wobei sie innen in die Tragschiene eindringen.

11. Profil (100') nach einem der Ansprüche 1 bis 9,
**dadurch gekennzeichnet, dass** die Befestigungsmittel des Profils einen Längshohlträger (131') mit verformbaren Wänden (131'A) umfassen, die sich jeweils an die Längsaußenseite des Profils (100') anschließen und dabei eine Längsnut (132', 133') bilden, wobei der Längshohlträger (131') innen in die Tragschiene (12) elastisch eingeführt zu werden vermag, die einen U-förmigen Querschnitt mit zwei Seitenlängsschenkeln (12A, 12B) aufweist, die oben mit zueinander weisenden Umbiegungen (12'A, 12'B) versehen sind, wobei die Umbiegungen (12'A, 12'B) der Seitenlängsschenkel (12A, 12B) der Tragschiene (12) dazu bestimmt sind, beim Einführen des Längshohlträgers (131') in die Tragschiene in die Längsnuten (132', 133') des Profils (100') einzugreifen.

12. Profil (100) nach einem der Ansprüche 1 bis 11, mit parallel zueinander verlaufender Längsvorderwand (120) und Längsrückwand (110),
**dadurch gekennzeichnet, dass** wenigstens eine der Wände, Vorderwand (120) oder Rückwand (110), an ihrer Außenseite mit wenigstens einem Mittel (122) zur Markierung und Positionierung eines Werkzeugs (1) zum Bohren einer Zugangsöffnung (12) in das Profil versehen ist.

13. Profil (100) nach Anspruch 12,
**dadurch gekennzeichnet, dass** es sich bei dem Markierungs- und Positionierungsmittel (122) um eine Längsrille handelt, die in der Außenseite der betreffenden Vorderwand (120) bzw. Rückwand (110) ausgebildet ist.

14. Profil (100) nach Anspruch 13,
**dadurch gekennzeichnet, dass** die betreffende Vorderwand (120) bzw. Rückwand (110) an ihrer Außenseite eine Vielzahl paralleler Längsrillen (122) aufweist, die eine Vielzahl von Markierungs- und Positionierungsmitteln für ein Werkzeug (1) zum Bohren einer Zugangsöffnung (121) in das Profil bilden.

15. Profil (100") nach einem der vorhergehenden Ansprüche,
**dadurch gekennzeichnet, dass** das Profil einen Sockel mit einem Boden und zwei parallelen Seitenlängswänden aufweist, sowie wenigstens einen Verschlussdeckel, der den Sockel zu verschließen vermag.

16. Profil nach Anspruch 15,
**dadurch gekennzeichnet, dass** jeder Verschlussdeckel durch Einrasten auf dem Sockel aufgesetzt ist.

17. Profil (100") nach Anspruch 15,
**dadurch gekennzeichnet, dass** jeder Verschlussdeckel auf dem Sockel gelenkig angebracht ist.

18. Profil (100") nach Anspruch 17,
**dadurch gekennzeichnet, dass** jeder Verschlussdeckel mit dem Sockel angeformt ist.

19. Profil (100) nach einem der vorhergehenden Ansprüche,
**dadurch gekennzeichnet, dass** es ein einstückig ausgebildetes, geschlossenes Hohlrohr ist.

20. Profil (100) nach einem der Ansprüche 15 bis 19,
**dadurch gekennzeichnet, dass** es eine Vielzahl voneinander unabhängiger I nnenkammern (100A, 100B, 100C) besitzt.
